Europäisches Patentamt

(19) European Patent Office

Office européen des brevets

(11) Numéro de publication: **0 140 797**
**B1**

# (12) FASCICULE DE BREVET EUROPÉEN

(45) Date de publication du fascicule du brevet:
**20.05.87**

(21) Numéro de dépôt: **84420148.3**

(22) Date de dépôt: **31.08.84**

(51) Int. Cl.⁴: **H 02 G 9/02,** F 16 L 1/02

(54) **Matériau pour la signalisation des canalisations souterraines.**

(30) Priorité: **06.09.83 FR 8314438**

(43) Date de publication de la demande:
**08.05.85 Bulletin 85/19**

(45) Mention de la délivrance du brevet:
**20.05.87 Bulletin 87/21**

(84) Etats contractants désignés:
**AT BE CH DE GB IT LI LU NL SE**

(56) Documents cité:
**FR-A-2 190 241**
**FR-A-2 384 427**
**US-A-3 282 057**
**US-A-3 908 582**

(73) Titulaire: **PLYMOUTH FRANCAISE, 21 allée du
Rhône, F-69320 Feyzin (FR)**

(72) Inventeur: **De Courville, Arnaud, 3 chemin des
Vignettes, Feyzin (Rhône) (FR)**

(74) Mandataire: **Maureau, Bernard, Cabinet GERMAIN
& MAUREAU 20, boulevard E. Deruelle B.P. 3011,
F-69392 Lyon Cédex 03 (FR)**

EP 0 140 797 B1

## Description

Il est connu de placer sur les canalisations souterraines des matériaux facilitant leur signalisation lors des fouilles; et c'est ainsi que ces matériaux se présentent souvent sous la forme de grillages féalisés en matière plastique.

Conformément au document FR-A-2.384.427, il est également connu d'associer à ces grillages des éléments en forme de bandes longitudinales continues et rectilignes dont certaines ont des résistances à l'allongement et à la rupture différentes de celles du grillage. Cette association, qui est destinée à faciliter la signalisation lorsque les fouilles sont faites à la pelle mécanique, ne permet pas toujours en fait d'atteindre ce but. L'expérience prouve en effet que souvent, lors de la rupture du grillage et des bandes par le godet de la pelle, les morceaux de bande arrachés par le godet disparaissent dans les matériaux saisis, et les bandes restant sur les parois de la fouille peuvent être peu visibles.

Si tel est le cas le matériau de signalisation ne joue plus qu imparfaitement son rôle, et le conducteur de la pelle peut ne pas voir le matériau de signalisation, et ainsi ne pas être alerté de la présence à une canalisation sous-jacente.

Il en est d'ailleurs de même lorsque la fouille est faite dans un terrain meuble qui, en s'éboulant de lui-même, masque les deux extrémités de chaque bande, en les dissimulant à la vue du conducteur.

Il arrive enfin que le godet de la pelle découpe de façon très nette les bandes associées au grillage; le conducteur ne voit alors les bandes ni dans les parois de la fouille, ni dans la masse de matériaux contenue dans la pelle.

Malgré leur intérêt, les bandes longitudinales associées au grillage ne permettent donc pas de garantir, systématiquement, lors des fouilles notamment lors des fouilles réalisées à la pelle mécanique, une signalisation certaine des canalisations placées sous le grillage.

Il y a là une lacune que l'invention pallie. Elle a pour objet un matériau de signalisation des canalisations souterraines, dans lequel un support ayant une faible résistance à la rupture est associé à avec au moins deux bandes rectilignes réalisees en une matière ayant une bonne résistance à la rupture , caractérisé en ce que ces bandes sont discontinues et sont décalées l'une par rapport à l'autre pour qu'il n'y ait pas concordance de leurs zones de discontinuité.

Diverses matières sont utilisables pour réaliser la ou les bandes entrant dans la constitution de ce matériau de signalisation. C'est ainsi que peuvent notamment être utilses des métaux protégés ou non contre la corrosion, des matières plastiques orientées ou non, des fibres tissées ou non.

Quant au support de cette ou de ces bandes, il peut aussi être réalisé en diverses matières, telles que:

-chlorure de polyvinyle, polyéthylène, polypropylène, fibres synthétiques,
- coton...
et il peut se présenter sous diverses formes:
- film perforé ou non,
- grillage,
- nappe: tissée ou non,
ou autres supports du type de ceux utilisés pour la stabilisation des sols.

Le support peut enfin être biodégradable.

Suivant une forme d'execution, le support est constitué par un grillage en matière plastique sur lequel sont fixés deux rubans de matière plastique délimitant deux goussets qui servent de logement aux éléments de bandes discontinues montées libres dans ces goussets les extrémités de chaque élément de bande étant décalées d'une bande à l'autre.

Suivant une autre variante, le matériau de signalisation est constitué en combinaison, par plusieurs bandes de matière plastique qui ayant une forte résistance à la rupture, sont discontinues, sont décalées au moins deux à deux, et sont reliées par des éléments transversaux à faible resistance à la rupture.

L'invention sera bien comprise d'ailleurs à l'aide de la description qui suit, en référence au dessin schématique annexé représentant à titre d'exemples non limitatifs quelques variantes d'exécution de ce matériau pour la signalisation des canalisations souterraines:

Figure 1 est une vue en plan par-dessus d'une première forme d'execution;

Figure 2 est, à plus grande échelle, une vue très schématique en coupe suivant 2-2 de figure 1;

Figure 3 est une vue en plan par-dessus d'une troisième forme d'exécution;

Figure 4 est une vue en perspective d'une tranchée laissant apparaître le matériau de signalisation et,

Figure 5 est une vue en perspective d'un godet de pelle mécanique contenant des matériaux provenant d'une tranchée et laissant apparaître le matériau de signalisation.

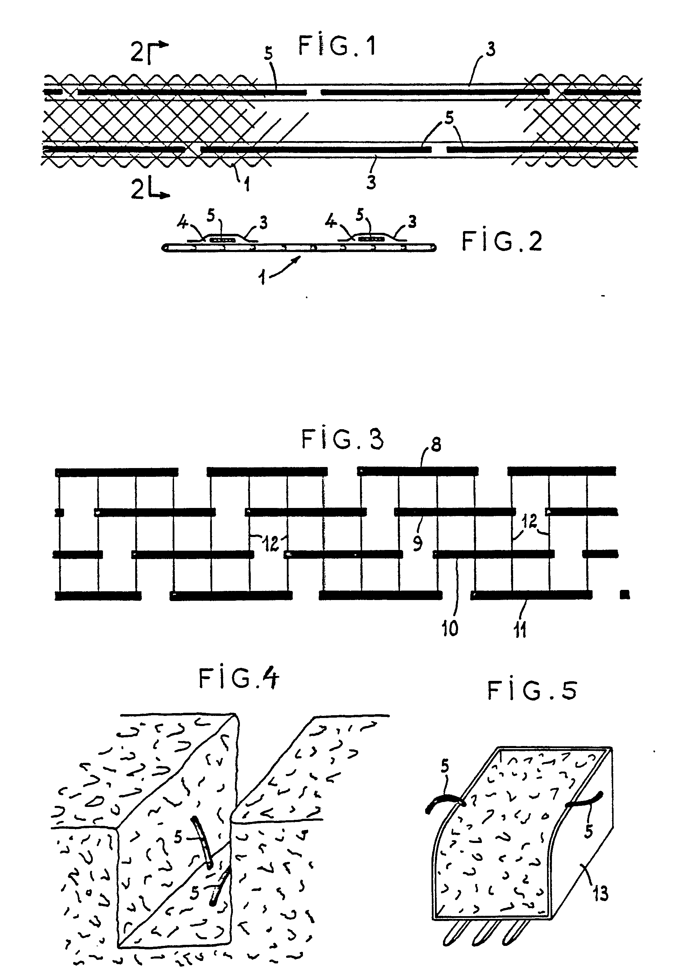

Conformement à la figure 1, le matériau destiné à la signalisation d'une canalisation souterraine est constitué par un grillage en matière plastique (1) portant deux rubans de matière plastque (3) qui sont soudés longitudinalement suivant leurs deux bords et délimitent ainsi, avec le grillage, deux goussets désignés par (4). Chacun de ces deux goussets sert de logement à un élément de renfort associé au grillage. Cet élément de renfort est en réalité constitué par une pluralité d'éléments individuels placés bout à bout et librement à l'intérieur des goussets (4). Ces éléments sont constitués chacun par une bande (5) réalisée en une matière plastique ayant une résistance à la rupture très supérieure à celle du grillage (1) et à celle des deux bandes de matière plastique (3) rapportées sur le grillage. Il est essentiel d'observer que les bandes ou éléments (5) placés dans un gousset (4) sont décalés par rapport à ceux placés dans l'autre gousset.

Dans la variante d'exécution réalisée à la figure 3, le matériau de signalisation présente une forme générale d'échelle. Il est constitué par quatre séries de bandes de matière plastique à forte résistance à la rupture. Ces bandes sont désignées respectivement par (8) (9), (10) et (11); elles sont parallèles et sont reliées par des fils ou éléments similaires (12) réalisés en une matière plastique à faible résistance à la rupture. Ces fils ou autres éléments (12) servent d'entretoises aux éléments principaux (8, 9, 10 et 11) et assurent la cohésion de l'ensemble. Il est important de remarquer que toutes les bandes médianes sont décalées les unes par rapport aux autres.

Quel que soit l'agencement du matériau de signalisation, c'est-à-dire qu'il soit conforme aux figures 1 et 2 ou à la figure 3, ses effets sont toujours les mêmes, sous réserve que les éléments ou bandes discontinues, respectivement (5, 8, 9, 10 et 11) soient constitués en une matière à plus forte résistance à la rupture que le support auquel ces éléments sont associés, et sous réserve que dans le cas des formes d'exécution des figures 1, 2 et 3, les extrémités des éléments discontinus soient décalées d'une bande par rapport à l'autre.

Si ces conditions sont satisfaites, le materiau de signalisation remplit parfaitement son rôle dans tous les cas, y compris lors de l'exécution d'une fouille ou d'une tranchée avec une pelle mécanique. Lorsque le godet de la pelle prélève la terre dans la tranchée, il exerce en effet sur le materiau de signalisation une traction suffisante pour provoquer la rupture du grillage (1) (dans le cas des figures 1 et 2), et des entretoises (12) (dans le cas de la figure 3); mais les bandes (5) (figures 1 et 2) et (8, 9, 10 et 11) figure 3) ne sont pas affectées par cette rupture, non seulement parce qu'elles sont constituées en une matière à forte résistance à la rupture, mais aussi et surtout parce qu'elles sont constituées par une pluralité d'éléments independants places bout a bout. Il en résulte que lorsque le godet a prélevé la terre dans une tranchée, des morceaux de bandes (5, 8, 9, 10 et 11) apparaissent automatiquement, sur les faces latérales de la tranchée comme le montre la figure 4 et/ ou à la partie supérieure du godet (13) de la pelie comme le montre la figure 5.

Dans le cas où une tranchée est creusée dans un terrain compact, des morceaux de bandes sont donc visibles non seulement sur le godet mais aussi sur les parois de la tranchée; et, si dans le cas où la tranchée est creusée dans un terrain meuble, l'éboulement dissimule les morceaux de bandes places dans le sol, des morceaux de bandes apparaissent néanmoins visiblement sur le godet (13) de la pelie. Dans tous les cas, le conducteur de la pelle décèle donc aisément la présence d'une canalisation souterraine.

**Revendications**

1 - Matériau pour la signalisation des canalisations souterraines, dans lequel un support (1, 12) ayant une faible résistance à la rupture est associé à au moins deux bandes rectilignes (5, 8, 9, 10, 11) réalisées en une matière ayant une bonne résistance à la rupture, caractérisé en ce que ces bandes (5, 8, 9, 10, 11) sont discontinues et sont décalées l'une par rapport à l'autre pour qu'il n'y ait pas concordance de leurs zones de discontinuité.

2 - Matériau de signalisation selon la revendication 1, caractérisé en ce que le support est constitué par un grillage en matière plastique (1) sur lequel sont fixés deux rubans de matière plastique (3) délimitant deux groussets (4) qui servent de logement aux éléments de bandes discontinues (5) montées libres dans ces groussets, les extrémités de chanque élément de bande (5) étant décalées d'une bande à l'autre.

3 - Matériau de signalisation selon la revendication 1, caractérisé en ce qu'il est constitué, en combinaison, par plusieurs bandes de matière plastique (8, 9, 10, 11) qui, ayant une forte résistance à la rupture, sont discontinues, sont décalées au moins deux à deux, et sont reliées par des éléments transversaux (12) à faible résistance à la rupture.

4 - Matériau de signalisation selon l'une quelconque des revendications 1 à 3, caractérisé en ce que le support du ou des éléments de signalisation est constitué en une matière biodégradable.

**Patentansprüche**

1. Material zum Anzeigen von unterirdischen Kanalisationen, wobei ein Träger (1, 12) mit einer geringen Reißfestigkeit wenigstens zwei geradlinigen Bändern (5, 8, 9, 10, 11) zugeordnet ist, dadurch <u>gekennzeichnet</u>, daß diese Bänder (5, 8, 9, 10, 11) unterbrochen sind und aus einem Material mit einer großen Reißfestigkeit bestehen, und daß sie gegeneinander längsversetzt sind, so daß sich deren Unterbrechungszonen nicht miteinander decken.

2. Material zum Anzeigen nach Anspruch 1, dadurch <u>gekennzeichnet</u>, daß der Träger aus einem Netz (1) aus Plastikmaterial gebildet ist, auf welchem zwei Streifen (3) aus Plastikmaterial befestigt sind, welche zwei Aufnahmen (4) begrenzen, die zur Aufnahme von unterbrochenen, in diesen Aufnahmen frei angeordneten Bändern (5) dienen, wobei die Enden jedes dieser Elemente der Bänder (5) gegeneinander längsversetzt sind.

3. Material zum Anzeigen nach Anspruch 1, dadurch <u>gekennzeichnet</u>, daß es als Kombination aus mehreren Bändern (8, 9, 10, 11) aus Plastikmaterial aufgebaut ist, welche eine große Reißfestigkeit aufweisen, welche unterbrochen sind, welche wenigstens jeweils paarweise gegeneinander längsversetzt sind und welche durch Querelemente (12) mit geringer Reißfestigkeit miteinander verbunden sind.

4. Material zum Anzeigen nach einem der Ansprüche 1 bis 3, dadurch <u>gekenzeichnet</u>, daß der Träger für das oder die Anzigeelemente aus einem biologisch abbaubaren Material besteht.

**Claims**

1. Equipment for indicating the presence of underground pipes, in which a support (1, 12) having a low resistance to breakage is associated with at least two rectilinear bands (5, 8, 9, 10, 11) made from a material having a high resistance to breakage, characterised in that these bands (5, 8, 9, 10, 11) are discontinuous and are staggered in relation to each other so that there is no coincidence between their regions of discontinuity.

2. Indicating equipment according to claim 1, characterised in that the support comprises a grid (1), formed from a plastics material, on which are fixed two strips (3) of plastics material forming two gussets (4) in which the discontinuous bands (5) can be freely mounted, the ends of each element of band (5) being staggered from one band to another.

3. Indicating equipment according to claim 1, characterised in that it is constituted by several bands of plastics material (8, 9, 10, 11) which have a high resistance to breakage, are discontinuous, are staggered at least two by two, and are connected by transverse elements (12) having low resistance to brakage.

4. Indicating equipment according any one of claims 1 to 3, wherein the support of the indicating element or elements is formed from a biodegradable material.

0 140 797

FIG.1

FIG.2

FIG.3

FIG.4

FIG.5